# EUROPEAN PATENT SPECIFICATION

(11) **EP 2 806 239 B1**
(45) Date of publication and mention of the grant of the patent: **18.10.2017**
(21) Application number: 14167120.6
(22) Date of filing: 06.05.2014
(51) Int. Cl.: F25D 23/06, F25D 23/02

(54) **Refrigerator and method of manufacturing the same**
Kühlschrank und Verfahren zur Herstellung davon
Réfrigérateur et son procédé de fabrication

(30) Priority: 22.05.2013 KR 20130057554
(43) Date of publication of application: 26.11.2014
(73) Proprietor: LG Electronics Inc., Seoul 150-721 (KR)
(72) Inventor: Kim, Soyoon, 153-802 Seoul (KR); Soh, Jaehyun, 153-802 Seoul (KR)
(74) Representative: Vossius & Partner Patentanwälte Rechtsanwälte mbB

(56) References cited:
- EP-A1- 0 860 669
- EP-A1- 1 484 563
- JP-A- 2001 132 892
- US-A- 2 710 993
- US-A- 5 066 437
- US-A- 5 457 138
- US-A- 5 575 871
- US-A1- 2004 229 968
- US-A1- 2010 231 109
- US-A1- 2011 115 355

## Description

The present invention relates to a refrigerator with excellent insulation performance and a method of manufacturing the same, and more particularly, to a refrigerator including a door with excellent insulation performance.

In general, refrigerators, which are an appliance to store foods at low temperature, maintain the temperature of a storage compartment at refrigerating or freezing temperature using a freezing cycle, and are electric products capable of keeping stored foods cool or frozen.

According to the preamble of claim 1, EP 0 860 669 A1 relates to a thermal insulator cabinet having high thermal insulating ability and long-term reliability. The thermal insulator cabinet includes a gas-tight container that is filled with a charging gas and a continuous spacing core and a gas-storage container that communicates with the gas-tight container and is filled with an absorbent for absorbing at least the charging gas, wherein the gas-storage container absorbs the charging gas to make inside of the gas-tight container a state of reduced pressure.

US 5 575 871 A discloses a method comprising the heating of an open cell rigid polyurethane foam at a temperature not lower than the temperature at which its storage modulus of elasticity begins to decrease and enclosing the thus-thermoformed polyurethane foam in a gas barrier material and evacuating the interior of a enclosure.

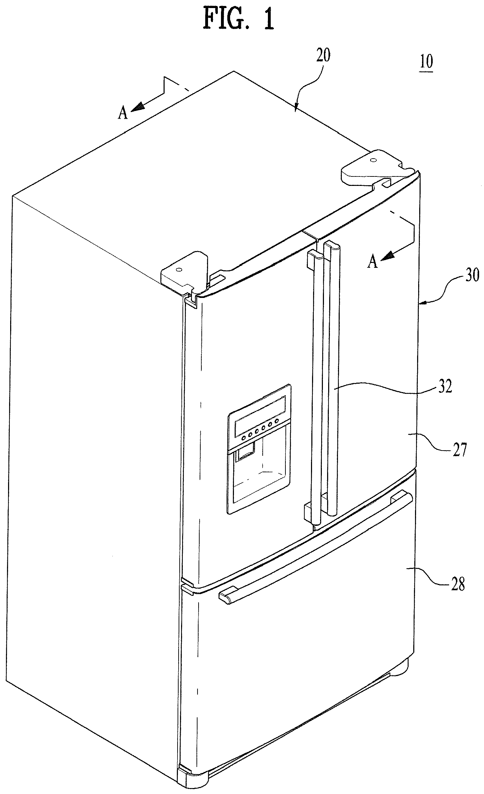

FIG. 1 is a view illustrating a structure of a conventional refrigerator 10. Referring to FIG. 1, the refrigerator 10 includes a main body 20 to form a storage space so as to store foods, doors 30 to open or close a refrigerating compartment 27 and a freezing compartment 28, and a machinery compartment to perform a refrigerant condensation cycle.

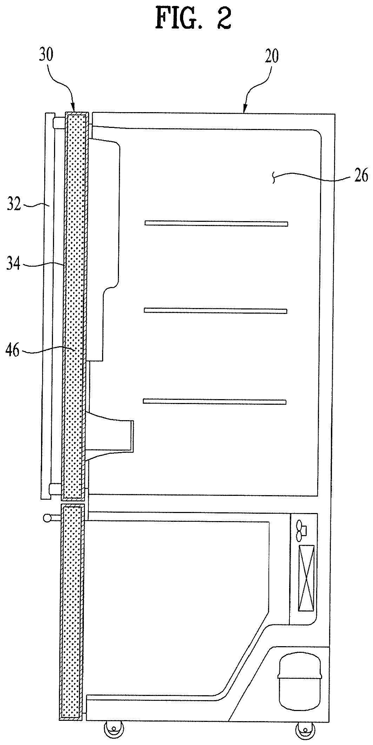

As shown in Fig. 2, the main body 20 includes an inner case 24 to form a storage space, an outer case 22 to accommodate the inner case 24, and a heat insulation material disposed between the inner case 24 and the outer case 22. Due to such a heat insulation material, effect of external temperature on a temperature in a storage space is prevented.

In the refrigerator 10, polyurethane foam, formed through injection of a polyurethane foam solution and foaming of the solution, is filled between the outer case 22 and the inner case 24. Closed cell polyurethane foam is formed between the inner case 24 and the outer case 22 of a commercially available refrigerator, but such a structure has gas inside cells and thus has a thermal conductivity of 0.0160 kcal/mhr°C, which is not good performance.

That is, due to inclusion of air inside the closed cell polyurethane foam, there are limitations in enhancing insulation performance. Thus, recently, much effort is put into more effective enhancement of insulation performance of refrigerators.

In particular, refrigerator doors are frequently opened or closed and thus are easily affected by external temperature and, recently, use of door-in-door refrigerators is increasing and thus insulation problems thereof due to frequent opening or closing of doors occur.

However, to achieve insulation effects by inserting a heat insulation material alone into a refrigerator, the thickness of a heat insulation material has to be secured to some extent, which means that the thickness of the heat insulation material increases. Thus, the thickness of a wall between an inner case and an outer case increases and, accordingly, the size of a refrigerator increases.

However, when insulation effects are enhanced by forming a vacuum space portion between an outer case and an inner case of a refrigerator, an increase in volume of the refrigerator due to stacking of heat insulation materials may be prevented.

However, the vacuum space portion has a large sectional area and thus insulation performance of a refrigerator is dramatically deteriorated by even little increase in pressure due to air permeation and moisture permeation from the outside. This is because insulation performance obtained by such a vacuum space portion can be maintained only under high vacuum.

In addition, to maintain an external appearance of a vacuum space portion under high vacuum conditions from external impact or the like, outer and inner cases of refrigerators require very complicated structures and manufacturing processes.

Accordingly, the present invention is directed to a refrigerator and a method of manufacturing the same that substantially obviate one or more problems due to limitations and disadvantages of the related art.

An object of the present invention is to provide a refrigerator with superior insulation performance and a method of manufacturing the same.

Another object of the present invention is to provide a refrigerator using a vacuum heat insulation material that maintains a vacuum state and serves to support a structure of the refrigerator and a method of manufacturing the same.

Another object of the present invention is to provide a vacuum heat insulation material that retains insulation performance and structural stability despite external impact or predetermined reduction in degree of vacuum and a refrigerator using the same.

A further object of the present invention is to provide a more efficient material and fabrication shape of a housing for forming a space to accommodate a vacuum heat insulation material.

These objects are achieved with a refrigerator and a method according to the claims. Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a refrigerator includes a main body including a storage compartment to accommodate a substance to be stored and a door for selectively opening or closing the storage compartment, wherein the door includes a housing to form an external appearance of the door, a space part disposed in the housing and having a predetermined volume, a hole to allow communication between inner and outer sides of the space part, and a core material being an open cell polyurethane foam formed by a foam material injected via the hole to fill the space part.

The foam material for formation of the open cell polyurethane foam may be injected via a pipe inserted into the hole.

In a state in which the core material is filled, the space part may be vacuum evacuated via the pipe inserted into the hole.

The hole may include an injection hole for injection of the foam material and an exhaust hole for forming a predetermined degree of vacuum in the space part.

Injection of the foam material via the injection hole and discharge of air inside the space part into the outside via the exhaust hole may be simultaneously performed.

The injection hole and the exhaust hole may be formed at a surface of the housing facing the storage compartment.

The space part may include a getter for absorption of gas.

The housing may include a body part having an opening and a cover for closing the opening of the body part. The body part and the cover may be formed of acrylonitrile-butadiene-styrene (ABS) resin, and a hole may be formed in the body part.

In addition, the body part and the cover may be adhered to each other by thermal fusion, and inner circumferential surfaces of the body part and the cover may be plated. The plating process may be performed by electroplating, chemical plating, hot dipping, evaporation deposition plating, diffusion coating, ion plating, or the like.

The housing may be formed of a metal material. In this case, a boundary portion between adjacent surfaces of the housing may be sealed by welding.

After the injection of the foam material via the hole or the vacuum evacuation process is completed, the hole may be sealed by a sealing member.

The core material may be disposed in a space between the outer case that forms the external appearance of the main body and the inner case disposed in the outer case and forming the storage compartment of the main body.

It is to be understood that both the foregoing general description and the following detailed description of the present invention are exemplary and explanatory and are intended to provide further explanation of the invention as claimed.

The embodiments will be described in detail with reference to the following drawings in which like reference numerals refer to like elements wherein:
FIG. 1 is a perspective view of a refrigerator according to a conventional structure and according to an embodiment as broadly described herein;
FIG. 2 is a sectional view of a refrigerator according to a first embodiment of the present invention, taken along line A-A of FIG. 1;
FIG. 3 is a sectional view of a refrigerator according to a second embodiment of the present invention, taken along line A-A of FIG. 1;
FIG. 4 is a perspective view of a door in which a single hole is formed;
FIG. 5 is a perspective view of the door into which a pipe is inserted;
FIG. 6 is a sectional view of a door including an injection hole and an exhaust hole;
FIG. 7 is a sectional view of a door including a pipe and a sealing member;
FIG. 8 is a sectional view of a main body and a cover of the door of FIG. 5, taken along line B-B of FIG. 5;
FIG. 9 is a sectional view of the door of FIG. 5, an inner circumferential surface of which is plated, taken along line B-B of FIG. 5;
FIG. 10 is a scanning electron microscope (SEM) image of an open cell polyurethane foam according to the present invention;
FIG. 11 is a graph showing a relationship among pressure, cell diameter, and thermal conductivity; and
FIG. 12 is a flowchart illustrating a refrigerator manufacturing method according to an embodiment of the present invention.

Reference will now be made in detail to the preferred embodiments of the present invention, examples of which are illustrated in the accompanying drawings. Wherever possible, the same reference numbers will be used throughout the drawings to refer to the same or like parts.

Hereinafter, a refrigerator according to an embodiment of the present invention will be described in detail with reference to the accompanying drawings. However, the present invention should not be construed as limited to the embodiments set forth herein and other embodiments within the scope of other retrograde inventions or the present invention may be easily suggested by adding, changing or deleting other elements.

First, as illustrated in FIG. 1, the refrigerator according to the present invention includes a main body 20 to form storage compartments 26 and doors 30 rotatably arranged at the main body 20.

As shown in Fig. 2, the main body 20 includes an outer case 22 to form an external appearance of the main body 20 and an inner case 24 that is disposed inside the outer case 22 and forms the storage compartments 26 within the main body 20.

The storage compartments 26 of the main body 20 include a refrigerating compartment 27 and a freezing compartment 28. The refrigerating compartment 27 and the freezing compartment 28 may be provided at inner sides thereof with a plurality of drawers and shelves to accommodate various food.

In addition, the door 30 of the refrigerating compartment 27 or the freezing compartment 28 may be provided at a rear surface thereof with a plurality of baskets to accommodate food and, as desired, may be provided with an ice maker, a dispenser, a home bar, or the like.

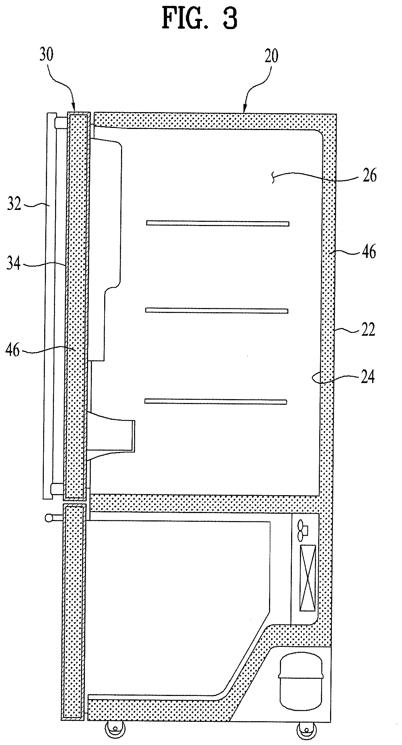

FIG. 2 is a sectional view of a refrigerator according to an embodiment of the present invention in which a vacuum heat insulation material is applied only to doors of the refrigerator. FIG. 3 is a sectional view of the refrigerator of FIG. 2 in which the core material 46 fills the doors thereof and a space between the outer case 22 and the inner case 24 and thus serves as a supporting body and a vacuum heat insulation material.

Hereinafter, the door 30 will be described in more detail with reference to the following drawings.

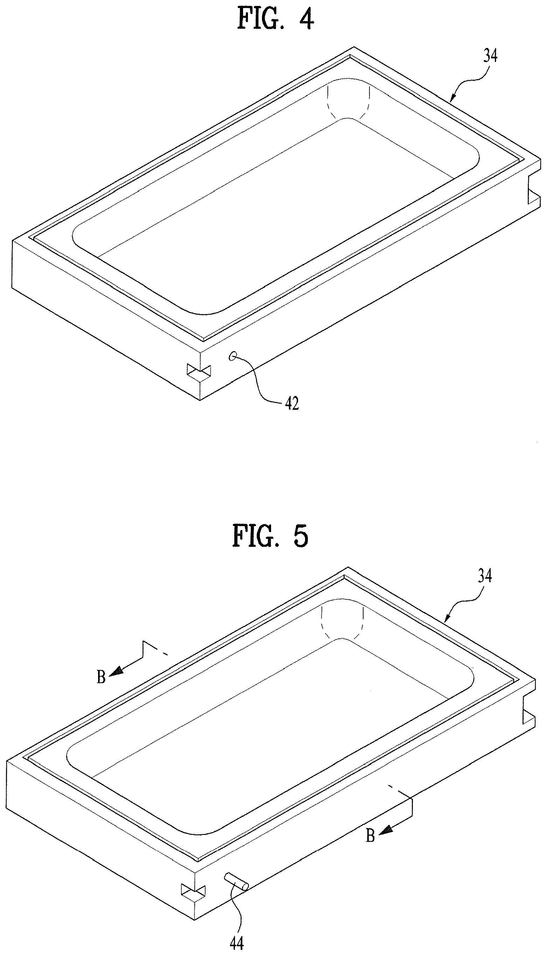

FIGs. 4 and 5 are perspective views of the door 30 according to the present invention.

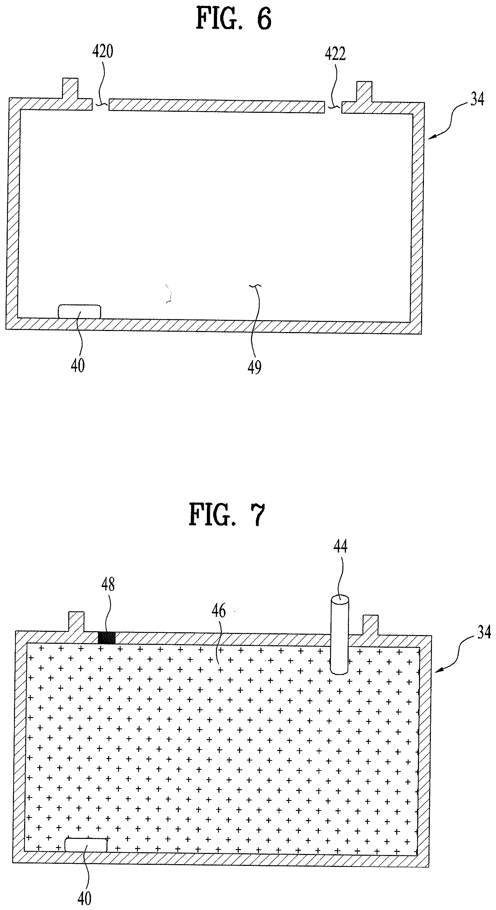

The door 30 opens or closes the storage compartment 26 of the main body 20 and includes a space part 49 (see Fig. 6) having a predetermined volume and a housing 34 having a hole 42 to allow communication between inner and outer sides of the space part 49, in which the space part 49 and the housing 34 form an external appearance of the door 30. A foam material is injected into the space part 49 via the hole 42 and a core material, which is open cell polyurethane foam formed by the foaming solution, fills the space part 49.

An inner surface of the housing 34 contacts the storage compartment 26 and an outer surface of the housing 34 forms the external appearance of the door 30. The housing 34 may be formed of a metal material or acrylonitrile-butadiene-styrene (ABS) resin, but embodiments of the present invention are not limited thereto.

When the housing 34 is formed of steel, the shape of the door 30 is formed by bending the steel and a boundary portion between adjacent surfaces of the housing 34 is sealed by welding. In this case, an increase in pressure of the space part 49 caused by gas generated from the housing 34 maybe prevented.

In addition, when the housing 34 is formed by welding steel, sealing is more effectively performed than when the housing 34 is fixed through engagement of grooves or adhesion of polyurethane.

However, as the number of welds of the housing 34 increases, the risk of welding defects may become high. Thus, there is a need to minimize the number of welds.

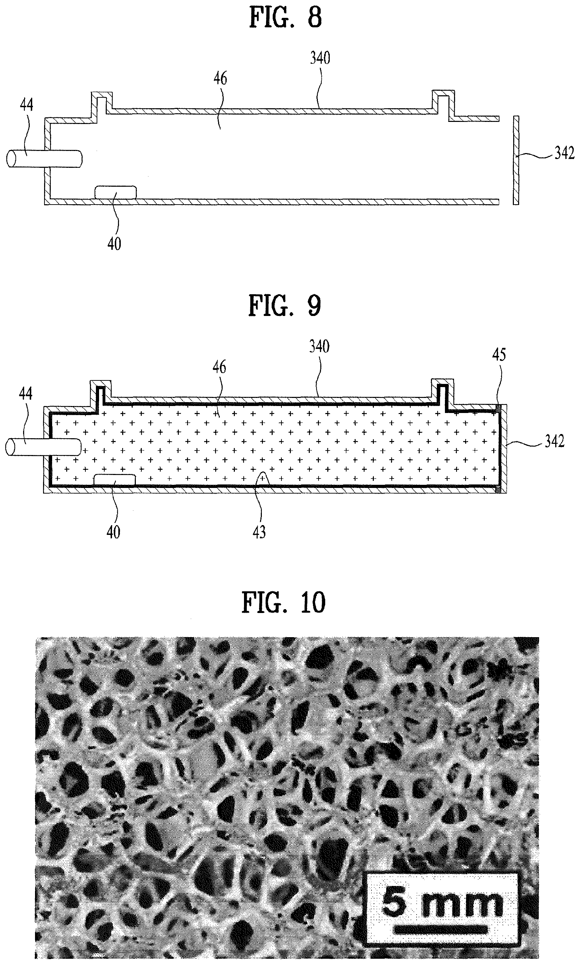

For this operation, as illustrated in FIG. 8, the housing 34 may be formed of ABS resin. In addition, the housing 34 is designed to include a body part 340 having an opening and a cover 342 to close the opening of the body part 340.

The hole 42 may be arranged at the body part 340. The body part 340 is closed by the cover 342 through thermal fusion (see 45 of FIG. 9).

When the housing 34 is formed of ABS resin and designed to include the body part 340 and the cover 342, a smaller number of thermal fusion portions 45 is formed than in a case in which steel is bent and boundary portions thereof are welded, and thus, a risk of welding defects decreases. Thus, it is more desirable in maintaining a vacuum state.

However, when the housing 34 is made of ABS resin, gas may be generated from the ABS resin. Gases generated from a material of the housing 34 may affect a predetermined degree of vacuum formed in the space part 49 and thus need to be prevented.

Thus, as illustrated in FIG. 9, before thermally fusing (see 45) the cover 342 onto the body part 340 of the housing 34, a process of plating (see 43) an inner circumferential surface of the housing 34 may be further performed. Through the plating process, discharge of gas generated from ABS resin to the space part 49 may be prevented.

The plating process may be performed by electroplating, chemical plating, hot dipping, evaporation deposition plating, diffusion coating, ion plating, or the like.

In addition, when the housing 34 is made of ABS resin, it is easier to form a complicated shape of a door liner inside the refrigerator.

FIG. 4 is a perspective view illustrating a case in which the hole 42 is arranged in the housing 34. FIG. 5 is a view illustrating a case in which a pipe 44 is inserted into the hole 42. The hole 42 is a path through which a foam material is injected into the sealed housing 34 and for vacuum evacuation after foaming.

In a case in which the pipe 44 is inserted into the hole 42, injection or vacuum evacuation of a foam material may be more conveniently performed. The hole may be one or more holes.

FIG. 6 is a sectional view illustrating the housing 34 in which two holes are formed. The holes may include an injection hole 420 for injection of a foam material and an exhaust hole 422 for forming a predetermined degree of vacuum in the space part 49. Air present in the space part 49 may be discharged via the exhaust hole 422. According to an exemplary embodiment of the present invention, the foam material for formation of the open cell polyurethane foam is injected via the pipe 44 inserted into the hole 42. Upon injecting the foam material via the injection hole 420, air inside the space part 49 may be discharged to the outside via the exhaust hole 422.

When the foam material is injected, a large amount of gas is generated. In this regard, the generated gas is discharged to the outside via the exhaust hole 422. Thus, a case in which the core material is unable to densely fill the space part 49 due to gas generated in the foam material injection process or a case in which the foam material reversely flows due to internal pressure when injecting the foam material may be prevented by arranging two holes.

In addition, the injection hole 420 and the exhaust hole 422 may be arranged at the same surface of the housing 34.

When injecting the foaming solution, arrangement of the injection hole 420 and the exhaust hole 422 at the same surface may be desirable in consideration of an air flow path in which air descends due to pushing of the foaming solution, flows towards an exhaust port and air ascends, thereby more efficiently inducing air exhaust.

Instead of separately arranging the injection hole 420 and the exhaust hole 422, the injection hole 420 and the exhaust hole 422 may be formed at the same position. That is, injection of the foam material and air exhaust may be performed using a single hole.

Before injection of the foaming solution, a getter 40 may be inserted. The getter 40 serves to absorb gas or moisture generated inside the space part 49.

FIG. 7 is a sectional view of the housing 34 in which, after completing injection of the foam material via the pipe 44 inserted into the injection hole 420, the pipe 44 is removed and the injection hole 420 is sealed.

In a state in which a core material 46 is filled, the space part 49 is vacuum evacuated via the pipe 44 inserted into the exhaust hole 422. Air in the open cell of the core material 46 is also vacuum evacuated and thus the space part 49 may form a predetermined degree of vacuum. Such a vacuum state determines insulation performance of the refrigerator according to the present invention.

When vacuum evacuation via the pipe 44 inserted into the exhaust hole 422 is completed, the pipe 44 is removed and the exhaust hole 422 is sealed and, consequently, the housing 34 forms a completely sealed space.

That is, the refrigerator may include a space part having a predetermined volume between the outer case 22 and the inner case 24. A hole to allow communication between inner and outer sides of the space part may be arranged at any one of the outer case 22 and the inner case 24.

The space part may be filled with a foam material via the hole, and a core material, which is open cell polyurethane foam formed by the foaming solution, may fill the space part.

In a state in which the core material is filled, the space part is vacuum evacuated via the hole. After vacuum evacuation, the exhaust hole 422 may be sealed by a sealing member.

FIG. 10 is a scanning electron microscope (SEM) image of the open cell polyurethane foam.

The space part 49 arranged in the housing 34 is filled with a foam material for forming the open cell polyurethane foam via the hole. After injection of the foaming solution, the open cell polyurethane foam is formed through foaming.

To use the open cell polyurethane foam as a core material of a vacuum heat insulation material, the open cell polyurethane foam has to maintain low thermal conductivity for a long period of time. Such low thermal conductivity largely depends upon the size of cells of the open cell polyurethane foam, and thus, it is necessary to minimize cell size to prepare an open cell polyurethane foam for forming a core material of a vacuum heat insulation material.

A second considering factor to use the open cell polyurethane foam as a core material of a vacuum heat insulation material is a cell opening rate. When a small amount of closed cells is present in the open cell polyurethane foam, gas of a foaming agent present in cells leaks towards the core material as time elapses even though initial insulation is excellent. Thus, vacuum pressure of foam of a vacuum heat insulation material is reduced and, accordingly, insulation performance of the foam is significantly deteriorated.

The open cell polyurethane foam, which is a core material, has a relatively small cell size and a very high cell opening rate and is used as a core material of a vacuum heat insulation material and thus may exhibit efficient insulation performance even in a relatively low degree of vacuum. In addition, the open cell polyurethane foam may be well suited to building structures or impact absorption, or for use as a core material of a vacuum heat insulation material.

To form a core material having excellent cell opening rate and a relatively small cell size, a reactive cell opening composition including a base oil and a metal salt of a fatty acid having a hydroxyl group capable of reacting with an isocyanate group may be added to the foaming solution.

The reactive cell opening composition may be formed as a grease-type mixture composition using a silicon oil surfactant or the like as a base oil and thus may maintain dispersibility at the molecular level. In addition, in a process of forming polyurethane foam to be prepared, a cell opening agent is chemically combined to a polyurethane main chain by reaction between a hydroxyl group (-OH) of a reactive cell opening agent and isocyanate (-NCO) and thus the reactive cell opening composition may perform effective cell opening performance at the molecular level. Thus, system instability and non-uniform cell formation according to formulation problems caused when a conventional aqueous cell opening agent is used or disadvantages according to dispersibility and mechanical abrasion during manufacturing processes, caused when a solid powder-type cell opening agent is used may be addressed. In addition, cell opening may be effectively performed using a relatively small amount of a cell opening agent.

The base oil is not particularly limited so long as it is capable of satisfactorily dispersing a reactive cell opening agent in the form of a metal salt of a fatty acid. For example, the base oil may be an oil-type surfactant. Preferably, the same surfactant as that used as a component of a polyol composition, which will be described below, may be used. For example, the base oil may be a silicon oil surfactant. Various kinds of silicon oil surfactants are commercially available and embodiments of the present invention are not limited thereto.

The reactive cell opening agent is a metal salt of a fatty acid having a hydroxyl group capable of reacting with an isocyanate group. A synthesis method of the reactive cell opening agent is not limited and the reactive cell opening agent may be obtained by reaction between a fatty acid having a hydroxyl group and a metal hydroxide. A metal salt may be separately synthesized and then added to the reactive cell opening composition, and neutralization may be induced in the composition by adding a fatty acid and a metal hydroxide to the base oil.

In this regard, the fatty acid may be a saturated or unsaturated fatty acid and may be selected from among C₈-C₃₀ fatty acids. Preferably, the fatty acid may be a saturated fatty acid. Examples of saturated fatty acids include, but are not limited to, caprylic acid (C8), capric acid (C10), lauric acid (C12), myristic acid (C16), palmitic acid (C16), stearic acid (C18), arachidic acid (C20), behenic acid (C22), and lignoceric acid (C24). The hydroxyl group may be a primary hydroxyl group positioned at the end of a fatty acid. In another embodiment, the hydroxyl group may be a secondary hydroxyl group positioned at the middle of a hydrocarbon group of a fatty acid, for example, 12-hydroxystearic acid (12HSA).

The metal hydroxide may be lithium hydroxide (LiOH), sodium hydroxide (NaOH), potassium hydroxide (KOH), calcium hydroxide (Ca(OH)₂), and the like, but embodiments of the present invention are not limited thereto.

The amount of the reactive cell opening agent, which is a metal salt of a fatty acid, may be 10 wt% to 50 wt% based on 100 parts by weight of the cell opening composition. When the amount of the reactive cell opening agent is less than 10 wt%, to adjust the concentration of the cell opening agent needed for a polyol composition to prepare polyurethane foam, the cell opening composition is used in a relatively large amount and thus an excess of base oil is added, which causes instability of a foaming system. When the amount of the reactive cell opening agent exceeds 50 wt%, the concentration of the reactive cell opening agent in the cell opening composition is excessively high and thus the viscosity of the composition dramatically increases and, accordingly, it is difficult to disperse the cell opening agent in the base oil at the molecular level.

In addition, to form the open cell polyurethane foam, a polyol composition including a polyol and a cell opening agent in combination is used. The cell opening agent may be added, to the polyol composition, as a metal salt of a fatty acid having a hydroxyl group capable of reacting with isocyanate

In this regard, the cell opening agent may be the cell opening agent described above and thus a detailed description thereof will be omitted herein. The cell opening agent may be directly added to the polyol composition and may be added in the form of the above-described cell opening composition to the polyol composition. Preferably, the cell opening agent may be added in the form of a cell opening composition, which is suitable for dispersion of the cell opening agent. As described above, the base oil of the cell opening composition may be a polyol composition component, for example, a silicon oil surfactant.

The polyol composition forms polyurethane foam through reaction with a polyisocyanate composition. The polyol composition may use formulations used for formation of conventional polyurethane foams. A polyol composition for preparation of a closed cell hard polyurethane foam optimized for use as a heat insulation material may also be used. In addition, general polyol formulations used to prepare an open cell hard polyurethane foam may also be used. The polyol formulations may include a polyol as a main component and a foam stabilizer, such as a surfactant, a catalyst, a nucleating agent, a foaming agent, a cell opening agent, or the like. In this regard, the surfactant and the cell opening agent may be components of the cell opening composition described above.

As the polyol, the same polyetherpolyols as those used to prepare a general hard polyurethane foam may be used alone or in combination. The amount of the polyol may be 70 wt% to 95 wt% based on 100 parts by weight of the polyol composition. Examples of polyols include, but are not limited to, alkylene glycols (e.g., ethylene glycol, propylene glycol, 1,4-butane diol, 1,6-hexane diol, and the like), glycol ethers (e.g., diethylene glycol, triethylene glycol, dipropylene glycol, tripropylene glycol, and the like), glycerin, trimethylolpropane, tertiary amine-containing polyols (e.g., triethanolamine, triisopropanolamine, and adducts of ethylene oxides such as ethylene diamine, toluene diamine, and the like and/or propylene oxides), polyether polyols, and polyester polyols. A suitable polyether polyol may be an alkylene oxide such as ethylene oxide, propylene oxide, or 1,2-butylene oxide or a polymer of a mixture of these alkylene oxides. The polyether may be a polymer of a mixture of polypropylene oxide or propylene oxide and a small amount (about 12 wt% or less) of ethylene oxide. These preferable polyethers may be capped with about 30 wt% or less of ethylene oxide. Polyester polyols may also be used. The polyester polyols include reaction products of a polyol, preferably diol and polycarboxylic acid or an anhydride thereof, preferably dicarboxylic acid or an anhydride thereof. The polycarboxylic acid or the anhydride thereof may be aliphatic, alicyclic, aromatic and/or heterocyclic and may be substituted with a functional group such as a halogen atom. The polycarboxylic acid may be unsaturated. Examples of polycarboxylic acids include succinic acid, adipic acid, terephthalic acid, isophthalic acid, a trimellitic anhydride, a phthalic anhydride, maleic acid, a maleic anhydride, and fumaric acid. Polyols used to prepare polyester polyols may have an equivalent weight of about 150 or less and include ethylene glycol, 1,2- and 1,3-propylene glycol, 1,4- and 2,3-butane diol, 1,6-hexane diol, 1,8-octane diol, neopentyl glycol, cyclohexane dimethanol, 2-methyl-1,3-propane diol, glycerin, trimethylol propane, 1,2,6-hexane triol, 1,2,4-butane triol, trimethylolethane, pentaerythritol, quinitol, mannitol, sorbitol, methyl glycoside, diethylene glycol, triethylene glycol, tetraethylene glycol, dipropylene glycol, dibutylene glycol, and the like. The polyol may have a hydroxyl value of 350 to 450 mgKOH/g. When the hydroxyl value of the polyol is less than 350 mgKOH/g, a polyurethane product with low hardness due to low crosslinking density during reaction may be formed. On the other hand, when the hydroxyl value of the polyol exceeds 450 mgKOH/g, a polyurethane product easily breakable due to excessively high crosslinking density during reaction may be formed.

As the foam stabilizer, one component or a mixture of two or more components may be used to stabilize formed cells and adjust opening of the cells. For example, the foam stabilizer may be a silicon-based surfactant, for example, the base oil of the reactive cell opening composition described above. The surfactant used as the foam stabilizer may be the same material as that used to prepare a general hard polyurethane foam for high heat insulation, and a mixture of one or more kinds may be used to form a foam having a microporous structure that provides heat insulation performance. For example, the foam stabilizer may be a mixture of B-8462 (manufactured by Gold Schmidt Co.) and Niax L-6900 (manufactured by Momentive Specialty Chemicals). The amount of the foam stabilizer (i.e., base oil) may be 0.5 to 5.0 parts by weight based on 100 parts by weight of the polyol. When the amount of the foam stabilizer is less than 0.5 parts by weight, foam stabilization defects may be caused due to low concentration, or the size and distribution of cells may be non-uniform. On the other hand, when the amount of the foam stabilizer exceeds 5.0 parts by weight, foaming defects according to instability of a foaming system due to excessive formation of an aqueous surfactant may be caused.

The amount of the cell opening agent may be 0.2 to 3.0 parts by weight based on 100 parts by weight of the polyol. When the amount of the cell opening agent is less than 0.2 parts by weight, a cell opening rate may be reduced according to a low concentration of the cell opening agent. On the other hand, when the amount of the cell opening agent exceeds 3.0 parts by weight, the size and size distribution of cells may be non-uniform due to excessive formulation of a solid cell opening agent or mechanical abrasion or the like due to excessive presence of a solid-phase cell opening agent in a foaming system may be caused.

To enhance insulation performance of the foam by decreasing cell size, a nucleating agent may be used. As the nucleating agent, a perfluoroalkane-based compound may be used and the amount thereof may be 1.0 to 5.0 parts by weight based on 100 parts by weight of the polyol.

The polyol composition may further include a foaming agent. A hydrocarbon-based physical foaming agent, generally used as a non-halogen-based environmentally friendly foaming agent, such as cyclopentane may be used and, as desired, a small amount of water may be added as a chemical foaming agent.

The polyol composition may further include a catalyst, and a general catalyst used to prepare a hard polyurethane foam may be added in a general catalyst amount and these catalysts may be used alone or in combination. For example, the catalyst may be a basic amine, for example, secondary aliphatic amine, imidazole, amidine, alkanolamine, Lewis acid, or a metal-organic compound, in particular a tin-based compound. In addition, as an isocyanurate catalyst, a metal carboxylate, in particular potassium acetate and a solution thereof may be used.

The present invention also provides an open cell polyurethane foam formed by reaction between a polyol composition including a polyol and a cell opening agent in combination and a polyisocyanate composition including a polyisocyanate compound, in which the cell opening agent is a metal salt of a fatty acid having a hydroxyl group capable of reacting with isocyanate. The polyol composition has already been described above and thus a detailed description thereof will be omitted herein.

The open cell polyurethane foam formed according to the present invention has a cell size of 100 µm or less that is much smaller than that of a conventional open cell polyurethane foam and may have a cell opening rate of 80%, particularly 90%, more particularly 98% or more. Thus, the open cell polyurethane foam is used as a core material of a vacuum heat insulation material and thus may exhibit efficient heat insulation performance even in a relatively low degree of vacuum and may be well suited to building structures or impact absorption or for use as a core material of a vacuum heat insulation material. It is assumed that these significant effects are obtained by chemically combining a metal salt of a fatty acid having a hydroxyl group capable of reacting with isocyanate, used as the cell opening agent, to a polyurethane chain.

The polyisocyanate composition includes a polyisocyanate compound. In this regard, the polyisocyanate compound means a compound having two or more isocyanate groups. As the polyisocyanate compound, a compound used to prepare a general hard polyurethane foam may be used. For example, the polyisocyanate compound may be at least one isocyanate selected from the group consisting of diphenyl methane diisocyanate (MDI), toluene diisocyanate (TDI), hexamethylene diisocyanate (HDI), dicyclohexylmethane diisocyanate (H12MDI), and isoporonediisocyanate (IPDI). In addition, as the polyisocyanate compound, a product obtained by chemical reaction of a modified multifunctional isocyanate, i.e., organic diisocyanate and/or polyisocyanate, may be used. For example, the polyisocyanate compound may be selected from among diisocyanate and/or polyisocyanate containing an uretdione group, a carbamate group, an isocyanurate group, a carbodiimide group, an allophanate group and/or a urethane group. The polyisocyanate may have a NCO% of 25% to 35%.

The above-described reactive cell opening composition may maintain dispersibility at the molecular level by being formed as a grease-type mixture composition using a silicon oil surfactant or the like as a base oil and may perform effective cell opening performance at the molecular level by chemically combining a cell opening agent to a polyurethane main chain. Thus, system instability and non-uniform cell formation according to formulation problems caused when a conventional aqueous cell opening agent is used or disadvantages according to dispersibility and mechanical abrasion during manufacturing processes, caused when a solid powder-type cell opening agent is used may be addressed. In addition, cell opening may be effectively performed using a relatively small amount of a cell opening agent.

Hereinafter, the cell opening composition, the core material, and relevant particulars will be described in detail with reference to a preparation example and examples. However, these examples are provided for illustrative purposes only and should not be construed as limiting the scope of the present invention.

### [Preparation Example 1] Preparation of Reactive Cell Opening Composition

To a 3L reaction vessel were added a formulation for preparation of polyurethane foam, 700 g of silicon oil used as a surfactant, and 277.9 g of 12-hydroxystearic acid (12HSA) and the resulting solution was heated to about 100°C while stirred at 1880 rpm to 3600 rpm. Subsequently, a solution in which 22.1 g of lithium hydroxide (LiOH) was dissolved in 100 ml of distilled water at 70°C was slowly added thereto over the course of 30 minutes to induce acid-base neutralization reaction. After the reaction was completed, the temperature of the reaction vessel was gradually raised to 200°C and the reaction product was stirred for 1 hour to completely remove moisture contained in the reaction product. Thereafter, the reaction product was slowly cooled to about 60°C and post treatment was performed using a roll mill and a filter, thereby preparing a composition having a solid content of 30 wt% and including a grease-type surfactant and a reactive cell opening agent in combination. Table 1 shows a mix ratio represented by wt% of LiOH to the silicon surfactant,_and molecular weights and mixed amounts of LiOH and 12HSA.

**[Table 1]**

| Compound | Molecular weight(g/mole) | Amount | Composition ratio |
|---|---|---|---|
| LiOH | 23.9 | 22.1 g | 30 wt% |
| 12HSA | 300 | 277.9 g | |
| Silicon oil | - | 700.0 g | 70 wt% |

### [Experimental Examples 1 and 2 and Comparative Example 1] Preparation of Hard Polyurethane Foam

Components shown in Table 2 below were mixed in amounts quantified according to composition ratios shown in Table 2 at room temperature (25°C) for 4 to 5 seconds using a mechanical mixer with high RPM and the resulting mixture was poured into an open mold having a size of 20x20 cm and a rectangular box shape to induce foam formation. After the reaction was completed, the formed foam was subjected to aging for 24 hours and cut and the size of the cell was measured using a scanning electron microscope (SEM) and is illustrated in Table2.

In addition, Table 3 below shows measurement results of properties of polyurethane foams prepared according to Experimental Examples 1 and 2 and Comparative Example 1.

**[Table 2]**

| | Component | | Comparative Example 1 | Experimental Example 1 | Experimental Example 2 |
|---|---|---|---|---|---|
| | | | Amount (phr) | Amount (phr) | Amount (phr) |
| A | Polyol(OHV 400□420 mmKOH/g) | | 100 | 100 | 100 |
| | Catalyst (amine/metal salt) | | 1.45 | 1.45 | 1.45 |
| | Foam stabilizer (silicon oil surfactant) | | 2.2 | 2.2 | 2.2 |
| | Nucleating agent(perfluoroalkane) | | 3.0 | 3.0 | 3.0 |
| | Foaming agent | H₂O | 2.0 | 2.0 | 2.0 |
| | | Cyclopentane | 16.5 | 16.5 | 16.5 |
| | Cell opening agent | 1-Butanol | 0 | 4.0 | 4.0 |
| | | Li 12HSA | 0 | 0 | 2.0 |
| B | polyisocyanate (NCO% 31.0-32%) | | | | |
| A/B | | | 100/123 | 100/123 | 100/123 |

**[Table 3]**

| Properties | | Comparative Example 1 | Experimental Example 1 | Experimental Example 2 |
|---|---|---|---|---|
| Cell opening agent (phr) | 1-Butanol | 0.0 | 4.0 | 4.0 |
| | Li 12HSA | 0.0 | 0.0 | 2.0 |
| Cell size (µm) | | ∼90.0 | ∼88.0 | ∼92.0 |
| Cell opening rate (%) | | 9.7 | 10.5 | 98.0 |
| Bulk density (kg/m³) | | 54.2 | 54.5 | 52.2 |
| Condensation intensity (kg/m²) | | 6.22 | 6.96 | 5.48 |
| k-factor (10⁻³ kcal/mhr°C) | | 26.55 | 26.40 | 27.13 |

As shown in Table 3, it can be confirmed that, in Comparative Example 1 in which a cell opening agent was not used, a closed cell hard polyurethane foam having a cell opening rate of less than 10% was formed. In addition, from the result according to Experimental Example 1, it can be confirmed that 1-butanol as a cell opening agent did not properly function as a cell opening agent. However, from the result according to Experimental Example 2, it can be confirmed that, when a reactive cell opening agent is used, an open cell hard polyurethane foam is obtained with excellent properties without damage to cell size and mechanical properties.

That is, it is very difficult to reduce heat insulation performance of the closed cell hard polyurethane foam to a level of heat insulation performance of a foaming gas or less. On the other hand, as described above, when the open cell hard polyurethane foam is used, the foam fills the inside of the housing and thus may support the structure of the refrigerator and maintain a vacuum state over a long period of time. That is, the open cell hard polyurethane foam acts as a supporting body of the inside of the housing and has a cell opening rate of 90% or more and thus internal gases leak from cells in a vacuum state, leading to an empty state of the cells.

In general, to enhance heat insulation performance, a vacuum heat insulation material is attached to the inside of a refrigerator. In this case, heat insulation performance corresponds to about 0.0130kcal/mhr°C. Unlike a conventional refrigerator in a vacuum heat insulation material is formed and a closed cell polyurethane foam is foamed, when all wall surfaces of a refrigerator are foamed with an open cell polyurethane foam and vacuum evacuated, heat insulation performance may be enhanced to 0.0070kcal/mhr°C or less. Thus, when all wall surfaces of the door 30 or the main body 20 are filled with the open cell polyurethane foam through foaming, heat insulation performance may be increased by 50% or more as compared to conventional refrigerators.

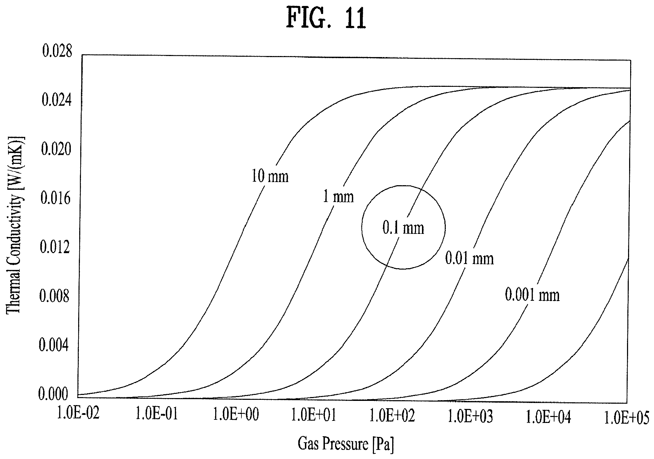

FIG. 11 is a graph showing a relationship among pressure, cell diameter, and thermal conductivity.

As illustrated in FIG. 11, in a case in which the same pressure is maintained, thermal conductivity decreases as cell diameter decreases. Thus, the open cell polyurethane foam having a cell diameter of about 100 µm, which is a core material, may maintain low thermal conductivity at a pressure of 1 Pa or less.

Thus, in the refrigerator according to the present invention, the door 30 or the main body 20 is entirely heat-insulated using a vacuum layer and thus heat insulation performance of the refrigerator is increased by 50% or more as compared to conventional refrigerators and air permeation, moisture permeation, and rapid deterioration of heat insulation performance due to increase in pressure by internally generated gases may be prevented.

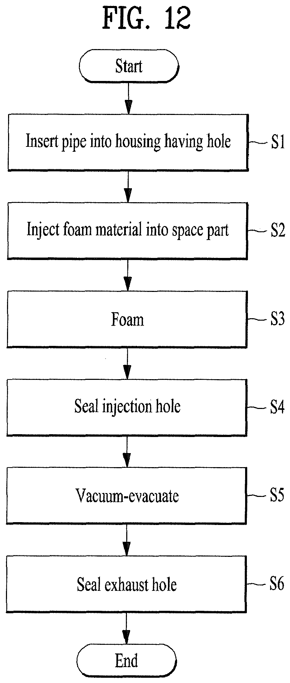

Hereinafter, a method of manufacturing a refrigerator having the above-described structure will be described in detail with reference to FIG. 12.

The space part 49 having a predetermined volume and the housing 34 having a hole to allow communication between inner and outer sides of the space part 49 are arranged, and the pipe 44 is inserted into the injection hole 420 through which a foam material is injected (operation S1). The foam material is injected into the space part 49 via the pipe 44 (operation S2). The getter 40 may be inserted before injection of the foaming solution.

The foam material is foamed to form the core material 46 formed of an open cell polyurethane foam (operation S3). To form open cells, a reactive cell opening agent may be added. In the injection of the foaming solution, an exhausting process for removal of air in the space part 49 via the exhaust hole 422 may be performed.

After the foaming process is completed, the pipe 44 inserted into the injection hole 420 is removed and the injection hole 420 is sealed (operation S4).

Thereafter, the space part 49 is vacuum evacuated via the pipe 44 inserted into the exhaust hole 422 (operation S5). When a predetermined vacuum state is formed in the space part 49 through the vacuum evacuation process, the pipe 44 inserted into the exhaust hole 422 is removed and the exhaust hole 422 is sealed, thereby forming a completely sealed space (operation S6).

In another embodiment, first, the core material 46 is prepared so as to have the same shape as that of the door 30 or the main body 20 of the refrigerator and then put into the housing 34 to form the external appearance of the door 30.

The core material 46 is positioned inside the housing 34 and then the housing 34 is sealed. For this operation, the pipe 44 is inserted into the housing 34 to vacuum evacuate the inside of the housing 34 there through.

After vacuum evacuation, the pipe 44 is removed and the hole is sealed to form a sealed space. Through these processes, a refrigerator including a door, the inside of which is filled with a vacuum heat insulation material according to the present invention, may be manufactured.

The manufacturing method may also be applied to a space between the outer case 22 and the inner case 24 of the main body 20 of the refrigerator.

According to an embodiment of the present invention, a refrigerator with excellent heat insulation performance and a method of manufacturing the same may be provided.

According to an embodiment of the present invention, a refrigerator using a vacuum heat insulation material that maintains a vacuum state and serves to support the structure of the refrigerator and a method of manufacturing the same.

According to an embodiment of the present invention, a vacuum heat insulation material that maintains heat insulation performance and structural stability in spite of external impact or reduction in a predetermined degree of vacuum and a refrigerator using the same may be provided.

According to an embodiment of the present invention, a more efficient material and fabrication shape of a housing for formation of a space to accommodate a vacuum heat insulation material may be provided.

## Claims

1. A refrigerator comprising:
a main body (20) having a storage compartment (26, 28),
a door (30) for selectively opening or closing the storage compartment (26, 28),
wherein the door (30) comprises:
a housing (34) to form an external appearance of the door (30) and having a space part (49);
a hole (42) to allow communication between inner and outer sides of the space part (49), wherein the hole (42) comprises an injection hole (420) for injection of the foam material and an exhaust hole (422) for exhaust of air present in the space part (49); and
an open cell polyurethane foam formed by a foam material filled in the space part (49) through the hole (42),
wherein the space part (49) is vacuum evacuated and sealed
wherein the housing (34) comprises a body part (340) having an opening and a cover (342) for closing the opening of the body part (340), **characterized in that** the body part (340) and the cover (342) are formed of acrylonitrile-butadiene-styrene (ABS) resin, and the body part (340) and the cover (342) are adhered to each other by thermal fusion (45),
the injection hole (420) and the exhaust hole (422) are formed at the same surface of the body part (340), and the foam material is configured to be injected through the injection hole (420) and, the exhaust hole (422) is configured to discharge air inside the space part (49) to an outside thereof at the same time, inner circumferential surfaces of the body part (340) and the cover (342) are plated or deposited with a metal (43) to prevent discharge of gas generated from ABS resin to the space part (49).

2. The refrigerator according to claim 1, wherein the foam material is injectable into the space part (49) through a pipe (44) inserted into injection the hole (420) and the space part (49) is evacuated through a pipe inserted into the exhaust hole (422).

3. The refrigerator according to claim 1 or 2, further comprising a sealing member for sealing the hole (42).

4. The refrigerator according to any one of claims 1 to 3, wherein the space part (49) comprises a getter (40) for absorption of gas or moisture.

5. The refrigerator according to any one of claims 1 to 4, wherein the open cell polyurethane foam is formed by reaction between a polyol composition comprising a polyol and a cell opening agent and a polyisocyanate composition comprising a polyisocyanate compound,
wherein the cell opening agent is a metal salt of a fatty acid having a hydroxyl group capable of reacting with isocyanate.

6. The refrigerator according to claim 6, wherein the open cell polyurethane foam has a cell opening rate of 90 % or more.

7. The refrigerator according to claim 5 or 6, wherein the open cell polyurethane foam has an average cell size of 100 µm or less.

8. A method of manufacturing a refrigerator comprising a door (30) comprising a housing having an injection hole (420) for injection of the foam material and an exhaust hole (422) for exhaust of air present in the space part (49) to allow communication between inner and outer sides of a space part and forming an external appearance of the door, wherein the housing includes a body part having an opening and a cover to close the opening of the body part, the hole is arranged at the body part, and the body part and the cover are formed of acrylonitrile-butadiene-styrene (ABS)resin the method comprising:
plating an inner circumferential surface of the housing to prevent a discharge of gas generated from ABS resin to the space part;
thermally fusing the cover onto the body part of the housing;
inserting (S1) a pipe into the injection hole (420);
injecting (S2) a foam material into the space part through the pipe;
forming (S3) an open cell polyurethane foam by foaming the foaming solution;
vacuum-evacuating (S5) the space part through the exhaust hole (422); and
sealing (S6) the injection hole (420) and the exhaust hole (422),
**characterized in that**
the injection hole (420) and the exhaust hole (422) are formed at the same surface of the body part (340),
the injecting and an vacuum-evacuating process for removal of air inside the space part (49) through the exhaust hole (422) are simultaneously performed.

9. The method according to claim 8, further comprising adding a cell opening agent for formation of an open cell after the injecting.

10. The method according to claim 8 or 9, further comprising inserting a getter before the injecting.

## Patentansprüche

1. Kühlschrank mit:
einem Hauptkörper (20), der ein Aufbewahrungsfach (26, 28) aufweist,
einer Tür (30) zum selektiven Öffnen oder Schließen des Aufbewahrungsfachs (26, 28),
wobei die Tür (30) aufweist:
ein Gehäuse (34), um eine äußere Erscheinung der Tür (30) zu bilden, und das einen Raumteil (49) aufweist;
ein Loch (42), um eine Verbindung zwischen Innen- und Außenseiten des Raumteils (49) zu ermöglichen, wobei das Loch (42) ein Einspritzloch (420) zum Einspritzen des Schaumstoffs und ein Ablassloch (422) zum Ablassen von Luft aufweist, die im Raumteil (49) vorhanden ist; und
einen offenzelligen Polyurethan-Schaum, der durch einen Schaumstoff gebildet wird, der durch das Loch (42) in den Raumteil (49) gefüllt wird,
wobei der Raumteil (49) vakuumevakuiert und versiegelt ist,
wobei das Gehäuse (34) einen Körperteil (340) aufweist, der eine Öffnung und einen Deckel (342) zum Schließen der Öffnung des Körperteils (340) aufweist,
**dadurch gekennzeichnet, dass**
der Körperteil (340) und der Deckel (342) aus Acrylnitril-Butadien-Styrol- (ABS-) Harz ausgebildet sind, und der Körperteil (340) und der Deckel (342) durch thermische Verschmelzung (45) aneinander geklebt sind,
das Einspritzloch (420) und das Ablassloch (422) an derselben Fläche des Körperteils (340) ausgebildet sind, und der Schaumstoff konfiguriert ist, durch das Einspritzloch (420) eingespritzt zu werden, und das Ablassloch (422) konfiguriert ist, gleichzeitig Luft innerhalb des Raumteils (49) zu dessen Äußeren abzulassen, Innenumfangsflächen des Körperteils (340) und des Deckels (342) mit einem Metall (43) plattiert oder beschichtet sind, um einen Austritt von Gas, das vom ABS-Harz erzeugt wird, zum Raumteil (49) zu verhindern.

2. Kühlschrank nach Anspruch 1, wobei der Schaumstoff durch eine Röhre (44), die in das Einspritzloch (420) eingesetzt wird, in den Raumteil (49) einspritzbar ist, und der Raumteil (49) durch eine Röhre evakuiert wird, die in das Ablassloch (422) eingesetzt wird.

3. Kühlschrank nach Anspruch 1 oder 2, der ferner ein Versiegelungselement zum Versiegeln des Loches (42) aufweist.

4. Kühlschrank nach einem der Ansprüche 1 bis 3, wobei der Raumteil (49) einen Fangstoff (40) zur Absorption von Gas oder Feuchtigkeit aufweist.

5. Kühlschrank nach einem der Ansprüche 1 bis 4, wobei der offenzellige Polyurethan-Schaum durch eine Reaktion zwischen einer Polyol-Zusammensetzung, die ein Polyol und ein Zellöffnungsmittel aufweist, und einer Polyisocyanat-Zusammensetzung gebildet wird, die eine Polyisocyanat-Verbindung aufweist,
wobei das Zellöffnungsmittel ein Metallsalz einer Fettsäure ist, die eine Hydroxylgruppe aufweist, die zum Reagieren mit Isocyanat imstande ist.

6. Kühlschrank nach Anspruch 6, wobei der offenzellige Polyurethan-Schaum eine Zell-öffnungsrate von 90% oder mehr aufweist.

7. Kühlschrank nach Anspruch 5 oder 6, wobei der offenzellige Polyurethan-Schaum eine durchschnittliche Zellgröße von 100 µm oder weniger aufweist.

8. Verfahren zum Herstellen eines Kühlschranks, der eine Tür (30) aufweist, die aufweist:
ein Gehäuse, das ein Einspritzloch (420) zum Einspritzen des Schaumstoffs und ein Ablassloch (422) zum Ablassen von Luft aufweist, die im Raumteil (49) vorhanden ist, um eine Verbindung zwischen Innen- und Außenseiten eines Raumteils zu ermöglichen, und die eine äußere Erscheinung der Tür bildet, wobei das Gehäuse einen Körperteil aufweist, der eine Öffnung und einen Deckel aufweist, um die Öffnung des Körperteils zu verschließen, das Loch am Körperteil angeordnet ist und das Körperteil und der Deckel aus Acrylnitril-Butadien-Styrol- (ABS-) Harz ausgebildet sind, wobei das Verfahren aufweist:
Plattieren einer Innenumfangsfläche des Gehäuses, um einen Austritt von Gas, das vom ABS-Harz erzeugt wird, zum Raumteil zu verhindern;
thermisches Verschmelzen des Deckels auf den Körperteil des Gehäuses;
Einsetzen (S1) einer Röhre in das Einspritzloch (420);
Einspritzen (S2) eines Schaumstoffs in den Raumteil durch die Röhre;
Bilden (S3) eines offenzelligen Polyurethan-Schaums durch Aufschäumen der Schaumbildungslösung;
Vakuumevakuieren (S5) des Raumteils durch das Ablassloch (422); und
Versiegeln (S6) des Einspritzlochs (420) und des Ablasslochs (422),
**dadurch gekennzeichnet, dass**
das Einspritzloch (420) und das Ablassloch (422) an derselben Fläche des Körperteils (340) ausgebildet sind,
der Einspritz- und ein Vakuumevakuierungsvorgang zum Entfernen von Luft innerhalb des Raumteils (49) durch das Ablassloch (422) gleichzeitig ausgeführt werden.

9. Verfahren nach Anspruch 8, das ferner das Hinzufügen eines Zellöffnungsmittels zur Bildung einer offenen Zelle nach dem Einspritzen aufweist.

10. Verfahren nach Anspruch 8 oder 9, das ferner ein Einführen eines Fangstoffs vor dem Einspritzen aufweist.

## Revendications

1. Réfrigérateur comprenant :
un corps principal (20) comprenant un compartiment de stockage (26, 28),
une porte (30) pour l'ouverture ou la fermeture sélectives du compartiment de stockage (26, 28), ladite porte (30) comprenant :
un coffrage (34) destiné à donner son aspect extérieur à la porte (30) et comportant une partie d'espace (49) ;
un trou (42) permettant la communication entre l'intérieur et l'extérieur de la partie d'espace (49), ledit trou (42) comprenant un trou d'injection (420) pour l'injection de la mousse et un trou d'échappement (422) pour l'évacuation de l'air présent dans la partie d'espace (49) ; et
une mousse polyuréthane à cellules ouvertes formée par une mousse injectée dans la partie d'espace (49) par le trou (42),
où la partie d'espace (49) est soumise au vide et étanchéifiée,
où le coffrage (34) comporte une partie de corps (340) avec une ouverture et un couvercle (342) pour obturer l'ouverture de la partie de corps (340),
**caractérisé en ce que**
la partie de corps (340) et le couvercle (342) sont en résine acrylonitrile-butadiène-styrène (ABS), et la partie de corps (340) et le couvercle (342) adhèrent l'un à l'autre par fusion thermique (45),
le trou d'injection (420) et le trou d'échappement (422) sont formés sur la même surface de la partie de corps (340), et la mousse est prévue pour être injectée par le trou d'injection (420), et
le trou d'échappement (422) est prévu pour évacuer simultanément l'air à l'intérieur de la partie d'espace (49) vers l'extérieur,
les surfaces circonférentielles intérieures de la partie de corps (340) et le couvercle (342) sont revêtues ou reçoivent un dépôt de métal (43) pour empêcher l'échappement de gaz généré par la résine ABS vers la partie d'espace (49).

2. Réfrigérateur selon la revendication 1, où la mousse est injectable dans la partie d'espace (49) par un conduit (44) inséré dans le trou d'injection (420), et la partie d'espace (49) est soumise au vide par un conduit inséré dans le trou d'échappement (422).

3. Réfrigérateur selon la revendication 1 ou la revendication 2, comprenant en outre un élément de joint pour étanchéifier le trou (42).

4. Réfrigérateur selon l'une des revendications 1 à 3, où la partie d'espace (49) comprend un piège à gaz (40) pour l'absorption de gaz ou d'humidité.

5. Réfrigérateur selon l'une des revendications 1 à 4, où la mousse polyuréthane à cellules ouvertes est formée par réaction entre une composition de polyol comprenant un polyol et un agent d'ouverture cellulaire et une composition de polyisocyanate comprenant un composé de polyisocyanate,
l'agent d'ouverture cellulaire étant un sel métallique d'un acide gras présentant un groupe hydroxyle apte à réagir avec l'isocyanate.

6. Réfrigérateur selon la revendication 6, où la mousse polyuréthane à cellules ouvertes présente un taux d'ouverture cellulaire de 90 % ou plus.

7. Réfrigérateur selon la revendication 5 ou la revendication 6, où la mousse polyuréthane à cellules ouvertes présente une grandeur de cellule moyenne égale ou inférieure à 100 µm.

8. Procédé de fabrication d'un réfrigérateur comprenant une porte (30) présentant un coffrage ayant un trou d'injection (420) pour l'injection de la mousse et un trou d'échappement (422) pour l'évacuation de l'air présent dans la partie d'espace (49) permettant la communication entre l'intérieur et l'extérieur d'une partie d'espace et donnant son aspect extérieur à la porte, le coffrage comprenant une partie de corps avec une ouverture et un couvercle pour obturer l'ouverture de la partie de corps, le trou étant présenté sur la partie de corps, et la partie de corps et le couvercle étant en résine acrylonitrile-butadiène-styrène (ABS), ledit procédé comprenant :
le revêtement d'une surface circonférentielle extérieure du coffrage pour empêcher un échappement de gaz généré par la résine ABS vers la partie d'espace ;
la fusion thermique du couvercle sur la partie de corps du coffrage ;
l'insertion (S1) d'un conduit dans le trou d'injection (420) ;
l'injection (S2) d'une mousse dans la partie d'espace par le conduit ;
la formation (S3) d'une mousse polyuréthane à cellules ouvertes par moussage de la solution de mousse ;
la soumission au vide (S5) de la partie d'espace par le trou d'échappement (422) ; et
l'étanchéification (S6) du trou d'injection (420) et du trou d'échappement (422),
**caractérisé en ce que**
le trou d'injection (420) et le trou d'échappement (422) sont formés sur la même surface de la partie de corps (340),
l'injection et un processus de soumission au vide pour l'évacuation de l'air à l'intérieur de la partie d'espace (49) par le trou d'échappement (422) sont exécutés simultanément.

9. Procédé selon la revendication 8, comprenant en outre l'ajout d'un agent d'ouverture cellulaire pour la formation de cellules ouvertes après injection.

10. Procédé selon la revendication 8 ou la revendication 9, comprenant en outre la mise en place d'un piège à gaz avant injection.
